# EUROPÄISCHE PATENTSCHRIFT

(11) **EP 0 339 062 B1**
(45) Veröffentlichungstag und Bekanntmachung des Hinweises auf die Patenterteilung: **22.02.1995**
(21) Anmeldenummer: 88908963.7
(22) Anmeldetag: 21.10.1988
(51) Int. Cl.: B01D 57/02, G01N 27/26, C08J 5/06, D06M 15/00

(54) **POLYESTERGEWEBE ZUR HERSTELLUNG VON ELEKTROPHORESEGELEN UND ELEKTROPHORESEGEL**
TEXTILE OF POLYESTER FOR MANUFACTURING ELECTROPHORESIS GELS AND ELECTROPHORESIS GEL
TEXTILE DE POLYESTER POUR LA PRODUCTION DE GELS D'ELECTROPHORESE ET GEL D'ELECTROPHORESE

(30) Priorität: 24.10.1987 DE 3736087
(43) Veröffentlichungstag der Anmeldung: 02.11.1989
(73) Patentinhaber: SERVA FEINBIOCHEMICA GmbH & Co., D-69042 Heidelberg (DE)
(72) Erfinder: RADOLA, Bertold, D-8000 München 81 (DE); SCHWALL, Horst, D-6535 Gau-Algesheim (DE); DEMHARTER, Manfred, D-6900 Heidelberg (DE)
(74) Vertreter: Laudien, Dieter, Dr.
(86) Internationale Anmeldenummer: EP8800946
(87) Internationale Veröffentlichungsnummer: WO8903721

(56) Entgegenhaltungen:
- BE-A- 663 578
- DE-A- 3 032 069
- FR-A- 2 103 199
- GB-A- 962 575
- GB-A- 2 083 087
- US-A- 4 006 069
- US-A- 4 116 743
- US-A- 4 415 428
- US-A- 4 650 551
- Electrophoresis 1985, 6, S. 349-350

## Beschreibung

Die Erfindung betrifft neue Gewebe mit verbesserten Eigenschaften zur Herstellung von Elektrophoresegelen sowie neue Elektrophoresegele.

Bei zahlreichen Elektrophoresetechniken werden Polyacrylamidgele und Agarose als antikonvektive und siebende Matrizes verwendet. Die Gele werden in zwei Konfigurationen eingesetzt:
1) Zylindrische Gele, die eine Zeitlang sehr populär waren, werden heute vor allem für die Trennung in der ersten Dimension bei der zweidimensionalen Elektrophorese bevorzugt.
2) Flache Gele werden bei den heute am häufigsten angewandten Techniken, nämlich der Natriumdodecylsulfat (SDS)-Elektrophorese und der isoelektrischen Fokussierung, verwendet. Beide Geometrien haben gemeinsam, daß die Gele während der Trennung von außen, z.B. durch die Wände eines Glasröhrchens oder eine Glasplatte abgestützt werden. Nach der Trennung werden die Gele z.B. durch Proteinanfärbung, Enzymvisualisierung oder Blotting ausgewertet. Die nicht abgestützten Gele sind dabei einer beachtlichen mechanischen Belastung unterworfen, so daß Gele mit einer Schichtdicke < 0,7 mm nicht verwendet werden können.

Ein weiterer beachtlicher Nachteil liegt darin, daß herkömmliche Gele nicht dimensionsstabil sind und durch Quellen oder Schrumpfen in Lösungsmitteln unterschiedlicher Zusammensetzung leicht ihre Dimension ändern, was die Zuordnung der visualisierten Komponenten erschwert oder unmöglich macht.

Durch Aufpolymerisieren der Gele auf entsprechend vorbehandelte Polyesterfolien können die oben geschilderten Nachteile zum Teil beseitigt werden. Auf entsprechend vorbehandelten Polyesterfolien gelingt es, auch ultradünne, d.h. etwa 50 - 350 »m dünne Gele herzustellen, die im Vergleich mit Gelen herkömmlicher Schichtdicke (z.B. 1 - 3 mm) entscheidende arbeitstechnische Vorteile bei der isoelektrischen Fokussierung und SDS-Elektrophorese bieten. Solche foliengestützte Gele haben jedoch den Nachteil, daß sie für ein Kapillarblotting nicht optimal und für ein Elektroblotting völlig ungeeignet sind. Die deutsche Offenlegungsschrift DE-A-30 32 069 offenbart Copolymerisate auf der Basis von Maleinsäureanhydrid-Derivaten mit ungesättigten primären oder sekundären Aminen der EC-Doppelbindungen enthaltenen Epoxiden als Haftvermittler.

Eine Alternative zu den extern stabilisierten Gelen sind gewebegestützte Gele mit interner Stabilisierung. Solche Gele sind von beiden Seiten offen und damit für ein Blotting besonders geeignet. Sie sind aber auch für andere Anwendungen interessant, z.B. die präparative isoelektrische Fokussierung. Entgegen den Erwartungen hat sich jedoch gezeigt, daß die aus Geweben hergestellten Elektrophoresegele den Anforderungen in der Praxis nicht gerecht wurden.

### Aus Electrophoresis 1985, 6, Seite 349 - 350:

"Fabric reinforced polyacrylamide gels for elektroblotting" ist die Verwendung von filzartigen Polyestergeweben zur Herstellung von Elektrophoresegelen bekannt, die Verwendung von netzartigen Polyestergeweben war bislang nicht offenbart.

Man ist bisher davon ausgegangen, daß aufgrund der größeren Kontaktfläche zwischen dem Gewebe und dem Gel, im Vergleich zu Gelen auf Trägerfolien, eine ausreichende Haftung der gewebegestützten Gele auch auf nicht vorbehandelten Geweben geeignet ist. Dies mag für die Anwendungen zutreffen, bei denen die gewebegestützten Gele nach der elektrophoretischen Trennung lediglich angefärbt werden, weil dabei an die Gelhaftung keine erhöhten Anforderungen gestellt werden.

Anders ist es bei der derzeit wichtigsten Anwendung gewebegestützer Gele, nämlich beim Blotting. Bei dieser Technik wird nach der Trennung vom Gel mit Hilfe geeigneter Membranen, z.B. Nitrocellulose-Membranen, ein Abklatsch oder "Blot" angefertigt, in dem die aufgetrennten Komponenten immobilisiert werden, um dann für weitere Reaktionen, z.B. immunologische Nachweisverfahren zur Verfügung stehen. Der Transfer der aufgetrennten Komponenten in die Membran erfordert einen guten Kontakt zwischen der Geloberfläche und der Nitrocellulose-Membran, da sonst ein Teil der im Gel erzielten Auflösung verloren geht.

Der Transfer kann entweder durch ein Kapillarblotting oder ein Elektroblotting im elektrischen Feld durchgeführt werden. Bei beiden Transfertechniken wird auf das Gel und die Membran ein Druck angelegt, um eine möglichst genaue Kopie im Blot zu gewinnen.

Für die weitere Auswertung des Blots muß die Membran von der Geloberfläche abgehoben werden. Hierbei hat sich nun unerwarteterweise gezeigt, daß die Haftung der Gele mit dem stützenden Gewebe unzureichend ist. Teile des Gels oder sogar die gesamte Geloberfläche werden von der Membran mit abgelöst, so daß die anschließend Auswertung des Blots gestört oder sogar gänzlich unmöglich ist.

Ein weiterer Nachteil der bisher verwendeten gewebegestützten Gele ist, daß sich diese Gele häufig nicht vollständig entfärben lassen und hierdurch bedingt einen ungleichmäßigen Untergrund aufweisen. Dies kann sich nachteilig auf die weitere Auswertung der Gele auswirken.

Es ist die Aufgabe der vorliegenden Erfindung, gewebegestützte Elektrophoresegele mit verbesserten Eigenschaften, z.B. bei der Auswertung, sowie die zur Herstellung der Gele benötigten Polyestergewebe bereitzustellen.

Die erfindungsgemäße Aufgabe wird durch ein Polyestergewebe zur Herstellung von Elektrophoresegelen mit einer Maschenweite zwischen 10 und 100 »m und mit einem mehrschichtigen Überzug bestehend aus einer ersten Schicht aus einem Copolymerisat aus Maleinsäureanhydrid und Vinylmethylether mit Diallylamin, einer zweiten Schicht aus Allylglycidylagarose, und einer dritten Schicht aus einem Tensid gekennzeichnet ist, gelöst.

In einer anderen Ausführungsform weist das Polyestergewebe einen zweischichtigen Überzug aus einer ersten Schicht aus einem Copolymerisat aus Maleinsäureanhydrid und Vinylmethylether und einer zweiten äußeren Schicht aus Agarose auf, oder es weist einen mindestens zweischichtigen Überzug aus Allylglycidylagarose, wobei die äußere Schicht als Zusatz einen Tensid enthaltne kann, auf.

Geeignete Gewebe sind aus dem Stand der Technik bekannt und werden von verschiedenen Firmen auf dem Markt angeboten. Bevorzugt werden technische Gewebe aus Polyester mit einer definierten Maschenweite zwischen 10 und 100 »m verwendet. Bei der Auswahl der Gewebe ist darauf zu achten, daß sie bei den mitunter in der Elektrophoresetechnik häufig verwendeten agressiven Reagenzien oder Lösungsmitteln nicht angegriffen werden. Gewebegestützte Gele werden vorzugsweise zur Herstellung ultradünner Elektrophoresegele (50 bis 500 »m) eingesetzt, so daß die eingesetzten technischen Gewebe eine Stärke zwischen 40 und 70 »m, bevorzugt 50 bis 60 »m aufweisen sollten.

Der Überzug ist aus mehreren Schichten aufgebaut, die unterschiedliche Copolymerisate als Haftvermittler enthalten können. Die Haftvermittler (Vernetzungsmittel) bestehen aus einem Copolymerisat aus Maleinsäureanhydrid und Vinylmethylether (Gantrez AN) mit Diallylamin oder aus Agarose und Allylglycidylether (Allylglycidylagarose). Einzelheiten über die Zusammensetzung der Copolymerisate sind der DE-A-30 32 069 zu entnehmen. Je nach Ausführungsform kann auf dem mehrschichtigen Überzug ein weiterer Überzug aus einem Tensid, wie z.B. 2,4,7,9 -Tetramethyl-5-decin-4,7-diol (Surfynol^{R}), aufgebracht werden. In einer weiteren Ausführungsform kann das Tensid dem Haftvermittler als weitere Komponente direkt zugesetzt sein.

Zweckmäßigerweise wird die Zusammensetzung und der Aufbau des Überzuges dem später aufzutragenden Gel angepaßt.

Die Stärke (Dicke) des Überzugs ist variabel und kann beispielsweise bei der Herstellung durch Einstellung der Viskosität der verwendete Lösungen des Haftvermittlers beim Tauchverfahren eingestellt werden. Es ist jedoch in jedem Fall erforderlich, daß die gewebeartige Struktur des technischen Gewebes erhalten bleibt, d.h. die Maschen des Gewebes dürfen durch den Überzug nicht verschlossen werden, da sonst die Eigenschaften des gewebegestützten Geles nachteilig verändert würden.

Erfindungsgemäße Gewebe, die zur Herstellung eines gewebegestützten Polyacrylamid-Gels geeignet sind, zeigen beispielsweise folgenden Aufbau.
a) Polyestergewebe mit einer Porengröße zwischen 50 und 100 »m, bevorzugt 60 »m, und einer Stärke zwischen 40 und 70 »m.
b) 1. Überzug aus einen Copolymerisat aus Gantrez^{R} und Diallylamin.
c) 2. Überzug aus Allylglycidylagarose
d) 3. Überzug aus Surfynol 104^{R}.

Ein weiteres erfindungsgemäße Gewebe zur Herstellung eines gewebegestützen Agarose-Gels weist einen zweischichtigen Überzug auf.
a) Polyestergewebe mit einer Porengröße zwischen 50 und 100 »m, bevorzugt 60 »m,
b) 1. Überzug aus Gantrez AN
c) 2. Überzug aus Agarose.

Da die verwendeten Gewebe zumeist für eine andere Verwendung (z.B. als Siebe) vom Fachhandel angeboten werden, kann es vorteilhaft sein, diese vorzubehandeln, um die Haftung des Überzuges zu verbessern. Dies kann beispielsweise durch einfaches Waschen mit Wasser erfolgen.

Die Überzüge können in Analogie zu bekannten Tauchverfahren in einfacher Weise hergestellt werden.

Hierzu werden verwendeten Copolymerisate oder Tenside in geeigneten, möglichst leichtflüchtigen Lösungsmitteln gelöst. Geeignete Lösungsmittel sind beispielsweise Aceton, Methanol, Wasser und andere, wobei darauf zu achten ist, daß das Lösungsmittel die verwendeten Gewebe nicht angreift. Anschließend werden die Gewebe in die Lösung getaucht, so daß sie vollständig benetzt sind; daraufhin läßt man die überschüssige Lösung abtropfen und trocknet die nun überzogenen Gewebe vorsichtig. Vorzugsweise erfolgt die Trocknung des Gewebes bei erhöhten Temperaturen. Nach demselben Procedere können anschließend weiterer Überzüge derselben oder aber auch einer anderen Zusammensetzung aufgebracht werden.

Die so präparierten Gewebe können dann nach sorgfältiger Trocknung zur Herstellung gewebegestützter Elektrophoresegele verwendet werden. Entsprechende Techniken sind bekannt und brauchen nicht näher erläutert werden.

Die erfindungsgemäß herstellbaren Elektrophoresegele bestehen aus einem selbsttragenden Polyestergewebe mit einer Maschenweite zwischen 10 und 100 »m und einer Stärke (Dicke) zwischen 40 und 70 »m, wobei das Polyestergewebe einen mehrschichtigen Überzug aus einer ersten Schicht aus einem Copolymerisat aus Maleinsäureanhydrid und Vinylmethylether und Diallylamin, einer zweiten Schicht aus Allylglycidylagarose und einer dritten Schicht aus einem Tensid aufweist.

Weitere erfindungsgemäße Ausführungsformen sind gewebegestützte Elektrophoresegele aus einem selbsttragenden Polyestergewebe mit einer Maschenweite zwischen 10 und 100 »m und einer Stärke (Dicke) zwischen 40 und 70 »m, wobei das Polyestergewebe einen zweischichtigen Überzug aus einer ersten Schicht aus einem Copolymerisat aus Maleinsäureanhydrid und Vinylmethylether und einer zweiten äußeren Schicht aus Agarose aufweist und gewebegestützte Elektrophoresegele aus einem selbsttragenden Polyestergewebe mit einer Maschenweite zwischen 10 und 100 »m und einer Stärke (Dicke) zwischen 40 und 70 »m, wobei das Polyestergewebe einen mindestens zweischichtigen Überzug aus Allylglycidylagarose aufweist, wobei die äußere Schicht als Zusatz ein Tensid enthalten kann.

Die aus den erfindungsgemäßen Geweben hergestellten Elektrophoresegele haben wesentliche Vorteile:
Gewebegestütze Gele, die mit erfindungsgemäß vorbehandeltem Gewebe hergestellt werden, haben ein deutlich verbesserte Haftung, was z. B. in einem Test mit trockenem Membranen ermittelt werden kann. Angefeuchtete Membrane, wie sie beim Blotting verwendet werden, lassen sich leicht von der Geloberfläche abheben, ohne daß auch nur ein Teil des Gels mitgerissen wird.

Ein weiterer Vorteil der vorbehandelten Gewebe ist bei der Herstellung der gewebegestützen Gele gegeben. Die stark hydrophoben Eigenschaften der unbehandelten Gewebe erschweren das Eindringen der Polymersitationslösung bei der Herstellung ultradünner Gele.

Dieser Nachteil wird durch die erfindungsgemäß behandelten technischen Gewebe beseitigt. Die erfindungsgemäße Gewebe ermöglichen die Herstellung ultradünner Elektrophoresegele mit Schichtstärken zwischen 50 und 500 »m, wobei Gele mit einer Schichtstärke von ca. 150 »m bevorzugt sind.

Zusätzlich zu diesem Vorteil zeigen die vorbehandelten Gewebe auch bessere Eigenschaften beim Entfärben und der Transfereffizienz. Während unbehandelte Gewebe beim Entfärben häufig einen ungleichmäßigen Untergrund haben, sind die behandelten Gewebe gleichmäßig entfärbt. Die Transfereffizienz ist bei den behandelten Geweben besser. Auf diese Weise wird erreicht, daß sich die Proteine vom Gewebe quantitativ auf die Membran übertragen lassen.

### Ausführungsbeispiele

### Beispiel 1

Technisches Gewebe zur Herstellung eines gewebegestützten Polyacrylamid-Elektrophoresegels.

Ein Gewebe aus Polyester (PES Monodur 60 N, Fa. Verseidig, Kempen) wir wie folgt behandelt.
a) Herstellung der ersten Überzugsschicht:
   Das Gewebe wird in eine Lösung* aus
   6 ltr. Aceton
   381 mg Gantrez AN 179 (Serva^{R})
   22 ml DMF und
   237,6 mg Diallylamin
   getaucht, so daß es vollständig benetzt ist. Anschließend läßt man überschüssige Lösung abtropfen und trocknet bei Zimmertemperatur.
b) Herstellung der zweiten Überzugsschicht:
   Das wie unter a) beschrieben behandelte Gewebe wird nach dem Trocknen in eine 0,2 %ige Lösung von Allylglycidylagarose in Wasser getaucht und anschließend getrocknet.
c) Herstellung der dritten Überzugsschicht:
   Nach dem Trocknen wird das Gewebe abschließend in eine 0,1 %ige ethanolische Lösung von Surfynol 104 (Serva^{R}) getaucht und getrocknet.

*Die Lösung ist erst nach 24 Stunden gebrauchsfertig.

Das so präparierte Gewebe wird dann nach bekannten Verfahren, der sogenannten Klapptechnik oder Kassettentechnik, in die Monomerenmischung von Acrylamid und den bekannten Zusatzstoffen (Polymerisationsstarter etc.) eingelegt, die dann zu dem Gel polymerisiert.

### Beispiel 2

Technisches Gewebe zur Herstellung eines gewebegestützten Agarose-Elektrophoresegels.

Das Polyestergewebe (PES Monodur 60 N) wird wie in Beispiel 1 beschrieben nach dem Tauchverfahren präpariert.

### 1. Überzug

| | |
|---|---|
| Zusammensetzung der Lösung: | 8 ltr. Aceton |
| | 8 g Gantrez |

### 2. Überzug

| | |
|---|---|
| Zusammensetzung der Lösung: | 8 g Agarose/5,6 ml Wasser |
| | 6 ltr. Methanol |
| | 20 ml Glycerin |

Das fertige präparierte Gewebe wird nach bekannten Verfahren in Agarose eingebracht.

## Patentansprüche

1. Polyestergewebe zur Herstellung von Elektrophoresegelen mit einer Maschenweite zwischen 10 und 100 »m und mit einem mehrschichtigen Überzug bestehend aus einer ersten Schicht aus einem Copolymerisat aus Maleinsäureanhydrid und Vinylmethylether mit Diallylamin, einer zweiten Schicht aus Allylglycidylagarose, und einer dritten Schicht aus einem Tensid.

2. Polyestergewebe zur Herstellung von Elektrophoresegelen mit einer Maschenweite zwischen 10 und 100 »m und mit einem zweischichtigen Überzug aus einer ersten Schicht aus einem Copolymerisat aus Maleinsäureanhydrid und Vinylmethylether und einer zweiten äußeren Schicht aus Agarose.

3. Polyestergewebe zur Herstellung von Elektrophoresegelen mit einer Maschenweite zwischen 10 und 100 »m und mit einem mindestens zweischichtigen Überzug aus Allylglycidylagarose, wobei die äußere Schicht als Zusatz einen Tensid enthalten kann.

4. Gewebegestütztes Elektrophoresegel aus einem selbsttragenden Polyestergewebe mit einer Maschenweite zwischen 10 und 100 »m und einer Stärke (Dicke) zwischen 40 und 70 »m, wobei das Polyestergewebe einen mehrschichtigen Überzug aus einer ersten Schicht aus einem Copolymerisat aus Maleinsäureanhydrid und Vinylmethylether mit Diallylamin, einer zweiten Schicht aus Allylglycidylagarose.und einer dritten Schicht aus einem Tensid aufweist.

5. Gewebegestütztes Elektrophoresegel aus einem selbsttragenden Polyestergewebe mit einer Maschenweite zwischen 10 und 100 »m und einer Stärke (Dicke) zwischen 40 und 70 »m, wobei das Polyestergewebe einen zweischichtigen Überzug aus einer ersten Schicht aus einem Copolymerisat aus Maleinsäureanhydrid und Vinylmethylether und einer zweiten äußeren Schicht aus Agarose aufweist.

6. Gewebegestütztes Elektrophoresegel aus einem selbstragendem Polyestergewebe mit einer Maschenweite zwischen 10 und 100 »m und einer Stärke (Dicke) zwischen 40 und 70 »m, wobei das Polyestergewebe einen mindestens zweischichtigen Überzug aus Allylglycidylagarose aufweist, wobei die äußere Schicht als Zusatz ein Tensid enthalten kann.

7. Gewebegestütztes Elektrophoresegel nach Anspruch 4, wobei Gelsubstanz Polyacrylamid ist.

8. Gewebegestütztes Elektrophoresegel nach Anspruch 5, wobei die Gelsubstanz Agarose ist.

## Claims

1. Polyester fabric for the production of electrophoresis gels having a mesh size of between 10 and 100 »m and a multilayer coating consisting of a first layer of a copolymer of maleic acid anhydride and vinylmethylether with diallylamine, a second layer of allylglycidyl agarose and a third layer of a surfactant.

2. Polyester fabric for the production of electrophoresis gels having a mesh size of between 10 and 100 »m and a two-layer coating consisting of a first layer of a copolymer of maleic acid anhydride and vinylmethylether and a second outer layer of agarose.

3. Polyester fabric for the production of electrophoresis gels having a mesh size of between 10 and 100 »m and a coating, in at least two layers, of allylglycidyl agarose, the outer layer optionally containing a surfactant as additive.

4. Fabric-supported electrophoresis gel consisting of a self-supporting polyester fabric having a mesh size of between 10 and 100 »m and a thickness of between 40 and 70 »m, the polyester fabric having a multilayer coating consisting of a first layer of a copolymer of maleic acid anhydride and vinylmethylether with diallylamine, a second layer of allylglycidyl agarose and a third layer of a surfactant.

5. Fabric-supported electrophoresis gel consisting of a self-supporting polyester fabric having a mesh size of between 10 and 100 »m and a thickness of between 40 and 70 »m, the polyester fabric having a two-layer coating consisting of a first layer of a copolymer of maleic acid anhydride and vinylmethylether and a second outer layer of agarose.

6. Fabric-supported electrophoresis gel consisting of a self-supporting polyester fabric having a mesh size of between 10 and 100 »m and a thickness of between 40 and 70 »m, the polyester fabric having a coating, in at least two layers, of allylglycidyl agarose, the outer layer optionally containing a surfactant as additive.

7. Fabric-supported electrophoresis gel according to claim 4, the gel substance being polyacrylamide.

8. Fabric-supported electrophoresis gel according to claim 5, the gel substance being agarose.

## Revendications

1. Tissu de polyester pour la production de gels d'électrophorèse ayant une ouverture de maille comprise entre 10 et 100 »m et un revêtement multicouche consistant en une première couche d'un copolymérisat d'anhydride maléique et de vinylméthyléther avec la diallylamine, une seconde couche d'allylglycidylagarose et une troisième couche d'un tensioactif.

2. Tissu de polyester pour la production de gels d'électrophorèse ayant une ouverture de maille comprise entre 10 et 100 »m et un revêtement bicouche consistant en une première couche d'un copolymérisat d'anhydride maléique et de vinylméthyléther et en une seconde couche externe d'agarose.

3. Tissu de polyester pour la production de gels d'électrophorèse ayant une ouverture de maille comprise entre 10 et 100 »m et un revêtement au moins bicouche d'allylglycidylagarose, la couche externe pouvant contenir un tensioactif comme additif.

4. Gel d'électrophorèse soutenu par tissu constitué par un tissu de polyester autonome ayant une ouverture de maille comprise entre 10 et 100 »m et une épaisseur comprise entre 40 et 70 »m, le tissu de polyester comportant un revêtement multicouche constitué par une première couche d'un copolymérisat d'anhydride maléique et de vinylméthyléther avec la diallylamine, une seconde couche d'allylglycidylagarose et une troisième couche d'un tensioactif.

5. Gel d'électrophorèse soutenu par tissu en un tissu de polyester autonome ayant une ouverture de maille comprise entre 10 et 100 »m et une épaisseur comprise entre 40 et 70 »m, le tissu de polyester comportant un revêtement bicouche consistant en une première couche d'un copolymérisat d'anhydride maléique et de vinylméthyléther et en une seconde couche externe d'agarose.

6. Gel d'électrophorèse soutenu par tissu consistant en un tissu de polyester autonome ayant une ouverture de maille comprise entre 10 et 100 »m et une épaisseur comprise entre 40 et 70 »m, le tissu de polyester comportant un revêtement au moins bicouche d'allylglycidylagarose, la couche externe pouvant contenir un tensioactif comme additif.

7. Gel d'électrophorèse soutenu par tissu selon la revendication 4, dans lequel la substance du gel est le polyacrylamide.

8. Gel d'électrophorèse soutenu par tissu selon la revendication 5, dans lequel la substance du gel est l'agarose.
